**Europäisches Patentamt**

**European Patent Office**

**Office européen des brevets**

(19)

(11) Veröffentlichungsnummer: **0 472 903 A1**

## (12) EUROPÄISCHE PATENTANMELDUNG

(21) Anmeldenummer: **91112369.3**

(22) Anmeldetag: **24.07.91**

(51) Int. Cl.⁵: **B23Q 15/08**

(30) Priorität: **31.08.90 DE 4027628**

(43) Veröffentlichungstag der Anmeldung:
**04.03.92 Patentblatt 92/10**

(84) Benannte Vertragsstaaten:
**CH DE FR GB IT LI**

(71) Anmelder: **PETER WOLTERS AG**
**Büsumer Strasse 96**
**W-2370 Rendsburg(DE)**

(72) Erfinder: **Wittstock, Gerhard**
**Heidredder 32**
**W-2082 Uetersen(DE)**

(74) Vertreter: **Dipl.-Ing. H. Hauck, Dipl.-Ing. E.**
**Graalfs, Dipl.-Ing. W. Wehnert, Dr.-Ing. W.**
**Döring**
**Neuer Wall 41**
**W-2000 Hamburg 36(DE)**

(54) **Vorrichtung zur Steuerung oder Regelung von Läpp-, Hon- oder Poliermaschinen.**

(57) Vorrichtung zur Steuerung oder Regelung von Läpp-, Hon- oder Poliermaschinen, die mindestens eine von einem veränderlichen Arbeitsscheibenantrieb angetriebene Arbeitsscheibe, mindestens eine mit einer Umfangszahnung versehene Läuferscheibe und einen Innen- und einen Außenwälzkranz für die Läuferscheibe aufweisen, wobei mindestens der Innenwälzkranz von einem veränderbaren Innenwälzkranzantrieb angetrieben ist und eine Steuerstufe ein Steuersignal auf den Arbeitsscheibenantrieb und den Innenwälzkranzantrieb gibt zur Steuerung der gewünschten Antriebsdrehzahl, wobei der Steuerstufe eine die Eingangssignale für die Steuerstufe erzeugender Rechner vorgeschaltet ist, der die Drehzahl für den Innenwälzkranzantrieb und die Drehzahl für den Arbeitsscheibenantrieb aus den Formeln:

$$n_L = K_L \cdot n_M$$
$$n_\Delta = n \pm K_{UL} \cdot n_M$$

errechnet, wobei $K_L$ und $K_{UL}$ Konstanten der Abwälzgeometrie sind und $n_L$ als Eigendrehzahl und $n_\Delta$ als Differenzdrehzahl von Arbeitsscheibendrehzahl $n$ und Umlaufdrehzahl der Läuferscheibe die vorgegebenen Sollwerte bilden.

FIG.1

EP 0 472 903 A1

Die Erfindung bezieht sich auf eine Vorrichtung zur Steuerung oder Regelung von Läpp-, Hon- oder Poliermaschinen nach dem Oberbegriff des Patentanspruchs 1.

Bei der Zweischeibenbauart der eingangs genannten Maschinen ist bekannt, die zu bearbeitenden Werkstücke in Ausnehmungen von Läuferscheiben aufzunehmen, die am Umfang eine Zahnung aufweisen. Die Läuferscheiben wälzen sich an einem äußerem Wälzkranz ab und werden von einem inneren mit einer Antriebsvorrichtung verbundenen Wälzkranz angetrieben. Bei dieser Antriebsweise führen die Läuferscheiben eine Umlaufbewegung aus, während sie sich gleichzeitig um ihre Achse drehen. Die Größe der Umlauf- und der Eigendrehzahl der Läuferscheiben stehen in einem direkten Verhältnis zur Drehzahl des Antriebs für den Innenwälzkranz und zur Abwälzgeometrie, d.h. zu den Verhältnissen der Zähne von Außen- und Innenwälzkranz und der Läuferscheiben.

Wird zum Beispiel die Drehzahl für den Innenwälzkranz erhöht, erhöht sich die Eigendrehzahl der Läuferscheiben. Gleichzeitig wird auch die Umlaufdrehzahl der Läuferscheiben größer. Dies hat zur Folge, daß sich die Differenzgeschwindigkeit zwischen der Arbeitsscheibe und den Läuferscheiben ändert. Soll die Differenzgeschwindigkeit aus bearbeitungstechnischen Gründen beibehalten werden, muß die Drehzahl für die Arbeitsscheiben neu errechnet und vorgegeben werden. Die Drehzahl für den Innenwälzkranz ist für sich betrachtet unwesentlich. Wichtig ist für die Bearbeitung, wie häufig sich die Werkstücke pro Zeiteinheit von einer Innenposition am Innenwälzkranz zu einer Außenposition am Außenwälzkranz und wieder zurück bewegen. Soll hierfür eine feste Vorgabe gemacht werden, so muß zunächst anhand der Abwälzgeometrie die hierfür erforderliche Drehzahl für den Werkstückantrieb errechnet und eingestellt werden. Dadurch treten dann die bereits genannten, unerwünschten Veränderungen der Differenzgeschwindigkeiten zwischen Arbeitsscheiben und Läuferscheiben auf. Mit anderen Worten, eine Veränderung der Drehzahl für den Antrieb führt unter Umständen zu einer erheblichen und nicht ohne weiteres zu überblickenden Veränderung der Differenzgeschwindigkeiten zwischen Werkstücken und Arbeitsflächen, die von wesentlichem Einfluß sein können. Denn für die Bearbeitungsqualität und für die Abtragleistung bei den Werkstücken sowie auch für die Arbeitsscheibengeometrie ist die Differenzgeschwindigkeit zwischen Werkstücken und Arbeitsscheiben einerseits und die Eigendrehzahl der Läuferscheiben bzw. der Werkstücke andererseits von entscheidender Bedeutung.

Zur Einstellung der gewünschten Parameter lassen sich bei gegebener Abwälzgeometrie nur die Drehzahlen für die Arbeitsscheiben und den Antrieb des Innenwälzkranzes und ggf. des Außenwälzkranzes verändern. Bei der Bearbeitung einer bestimmten Charge geht im Stand der Technik die Bedienungsperson üblicherweise von empirischen Werten aus und müßte umständliche Berechnungen durchführen, wenn etwa die Drehzahl für den Innenwälzkranz verändert wird, um günstige Werte für Abtragleistung und Abtragqualität zu erhalten. Dies geschieht jedoch nicht. Vielmehr wird von einer angenommenen Drehzahl ausgegangen, die nach der Erfahrung die günstigsten Ergebnisse verspricht.

Der Erfindung liegt die Aufgabe zugrunde, eine Vorrichtung zur Steuerung oder Regelung von Läpp-, Hon- oder Poliermaschinen zu schaffen, mit der Abtragleistung, Bearbeitungsqualität und Produktivität in Abhängigkeit von der Werkstückbeschaffenheit, des Arbeitsmittels usw. auf die jeweils günstigen Werte eingestellt werden können.

Bei den bekannten Maschinen wird als Sollwert die Drehzahl für die Arbeitsscheibe und die Drehzahl des inneren Abwälzkranzes vorgegeben. Im Gegensatz dazu sieht die Erfindung einen der Steuerstufe vorgeschalteten Rechner vor, der die Sollwerte für die genannten Drehzahlen errechnet, und zwar aus Sollwertvorgaben für die Eigendrehzahl der Läuferscheiben und die Differenzdrehzahl aus Arbeitsscheiben- und Umlaufdrehzahl der Läuferscheibe nach vorgegebenen Formeln. Es versteht sich, daß statt Drehzahlen auch Geschwindigkeitswerte vorgegeben werden können. Bei stillstehendem äußeren Abwälzkranz ergibt sich die Eigendrehzahl der Läuferscheibe aus der nachstehenden Formel:

$$n_L = K_L \cdot n_M$$

$n_M$ ist die Drehzahl des Mittenantriebs (Innenwälzkranz) und $K_L$ ist eine Konstante, die sich aus der Abwälzgeometrie ergibt, d.h. aus dem Verhältnis der Zähnezahlen der Läuferscheibe und des Innen- und des Außenwälzkranzes. Für eine optimale Bearbeitung ist es wünschenswert, die Eigendrehzahl $n_L$ vorzugeben, und zwar in Abhängigkeit von dem Werkstückmaterial, seiner Beschaffenheit, den Drücken, mit denen die Arbeitsscheibe auf die Werkstücke wirkt, dem Läppmittel usw. Wird mithin die Eigendrehzahl der Läuferscheibe vorgegeben, errechnet der Rechner hieraus die erforderliche Antriebsdrehzahl für den Innenwälzkranz. Die Differenzgeschwindigkeit zwischen dem Umlauf der Läuferscheiben und der Arbeitsscheibe ist ebenfalls wesentlich für die Abtragleistung und die Bearbeitungsqualität. Wird diese ebenfalls vorgegeben, kann daraus die notwendige Drehzahl für eine Arbeitsscheibe nach folgender Formel berechnet werden:

$$n_\Delta = n \pm K_{UL} \cdot n_M,$$

wobei n die Arbeitsscheibendrehzahl, $n_M$ wie oben schon definiert, die Antriebsdrehzahl des Innenwälzkranzes und $K_{UL}$ das Zähnezahlverhältnis wiedergibt, das erforderlich ist, um die Umlaufdrehzahl zu erhalten. Auch hier kann wiederum statt einer Drehzahl die Geschwindigkeit vorgegeben werden.

Bei der Erfindung werden mithin nur die gewünschte Eigendrehzahl für die Läuferscheibe bzw. die Differenzdrehzahl zwischen Werkstück und Arbeitsscheibe als Sollwert vorgegeben. Bereits bei Veränderung eines dieser Parameter werden die anderen Parameter automatisch nach den obigen Formeln umgerechnet und neu eingestellt.

Besitzt die Maschine auch einen Antrieb für den Außenwälzkranz, so werden die obigen mathematischen Beziehungen dadurch grundsätzlich nicht verändert. Zur Drehzahl für den Werkstückantrieb muß dann nur noch je nach Drehrichtung die Drehzahl für den Außenwälzkranz hinzugezählt bzw. abgezogen werden. Die Drehzahl $n_A$ für den Außenwälzkranz ergibt sich daher aus den folgenden Formeln:

$$n_M = n'_M \pm n_A \text{ und}$$
$$n_A = -K_{UL} \cdot n'_M,$$

wobei $n_M$ die zusammengesetzte Drehzahl und $n'_M$ die nunmehrige Drehzahl für den Innenwälzkranz sind.

Bei der erfindungsgemäßen Vorrichtung kann auch eine Regelung vorgenommen werden, indem nach einer Ausgestaltung der Erfindung den Antrieben Fühler zur Messung der Drehzahl bzw. der Geschwindigkeiten zugeordnet sind und deren Ausgangssignale als Istwerte in den Rechner gegeben werden, wo sie mit den Sollwerten für die Steuersignale verglichen werden.

Mit Hilfe eines angetriebenen Außenwälzkranzes besteht die Möglichkeit, seine Drehzahl so zu wählen, daß die Umlaufdrehzahl für die Läuferscheiben z.B. Null wird. Dies ist der Fall, wenn die Drehzahl $n_A$ für den Außenwälzkranz gleich groß ist wie die Umlaufdrehzahl $n_{UL}$, nur entgegengesetztes Vorzeichen hat. In diesem Fall wird die Differenzdrehzahl zwischen Arbeitsscheibe und Läuferscheibe nur noch von der Drehzahl der Arbeitsscheibe bestimmt, und die Läuferscheiben rotieren um eine vorgegebene Achse. Mit Hilfe der erfindungsgemäßen Vorrichtung ist es auch möglich, die Umlaufdrehzahl für die Läuferscheibe in einer bestimmten Position automatisch Null werden zu lassen, so daß die Läuferscheibe an einer bestimmten Position angehalten wird. Außerdem kann in der definierten Position der Läuferscheibe deren Eigendrehung ebenfalls in einer bestimmten Eigenumlaufposition gestoppt werden, indem die Antriebe Außen- und Innenwälzkranz in einer vorgegebenen Umlaufposition anhalten, um zum Beispiel eine Werkstückentnahme vorzunehmen. Mit Hilfe des bereits erwähnten Drehzahlfühlers läßt sich nicht nur eine Drehzahlmessung, sondern auch eine Winkelmessung vornehmen, so daß die jeweilige Umlaufposition von Innen- und Außenwälzkranz genau bestimmbar ist.

Mit Hilfe der Erfindung ist es auch möglich, Arbeitsscheibe, Werkstückantrieb und äußeren Wälzkranz mit gleicher Drehzahl und Drehrichtung so anzutreiben, daß die Eigendrehzahl der Läuferscheibe Null wird, um die Läuferscheibe zu einer vorgegebenen Position zu bringen.

Bei der erfindungsgemäßen Vorgabe für die Sollwerte ergibt sich für die Bedienungsperson nicht automatisch, ob die Drehzahl für die Arbeitsscheibe und/oder den Mittenantrieb vorgegebene Werte überschreitet. Daher sieht eine Ausgestaltung der Erfindung eine Warnvorrichtung vor, die ein Warnsignal erzeugt, wenn die Drehzahl für die Arbeitsscheibe und den Innenwälzkranz einen vorgegebenen Wert überschreitet. Das Warnsignal kann zum Beispiel dazu verwendet werden, die Drehzahlen zu begrenzen.

Für die Abtragqualität und -leistung sowie für die Gleichmäßigkeit des Verschleißes an den Arbeitsscheiben kann es von Vorteil sein, in bekannter Weise die Drehrichtungen umzukehren. Daher sieht eine Ausgestaltung der Erfindung vor, daß der Rechner eine Drehrichtungsumkehr für den Antrieb des Innenwälzkranzes und/oder der Arbeitsscheibe vornimmt, wenn der Abtrag und/oder die Anzahl der Umläufe einen vorgegebenen Wert erreicht.

Die Erfindung wird nachfolgend anhand von Zeichnungen näher erläutert.

Fig. 1    zeigt schematisch eine Zweischeibenläppmaschine mit einer Vorrichtung nach der Erfindung.

Fig. 2    zeigt eine Draufsicht auf eine Läuferscheibenanordnung oberhalb der unteren Arbeitsscheibe der Läppmaschine nach Fig. 1.

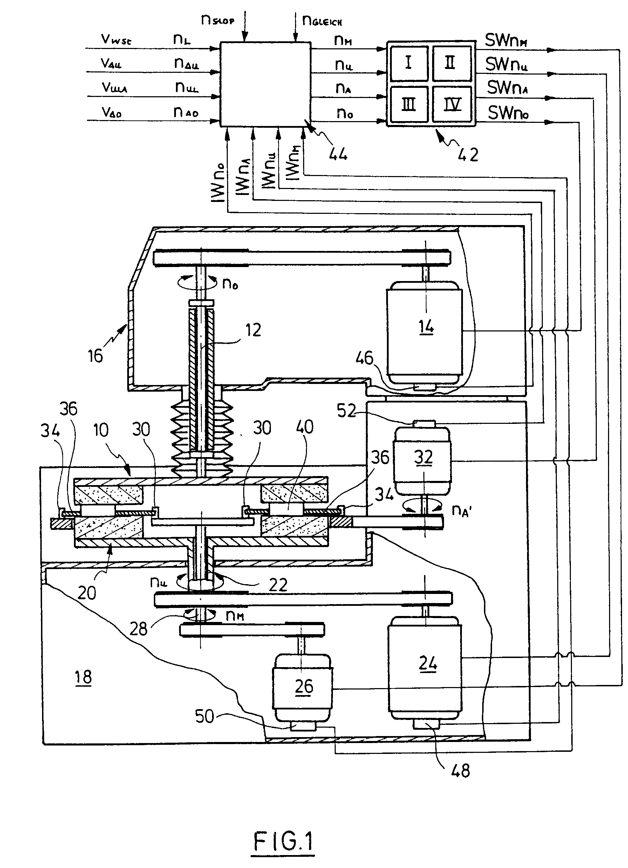

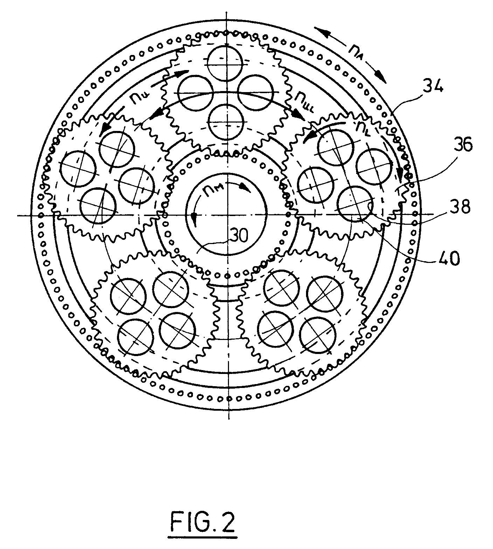

Die in Fig. 1 dargestellte Zweischeibenläppmaschine besitzt eine obere Arbeitsscheibe 10, die mittels einer Welle 12 von einem Antriebsmotor 14 angetrieben ist. Die beschriebenen Teile sitzen in einem oberen schwenkbaren Abschnitt 16 der Läppmaschine, der sich auf dem unteren Maschinenteil 18 abstützt. Der untere Teil lagert eine untere Arbeitsscheibe 20, die über eine Welle 22 vom Antriebsmotor 24 angetrieben ist. Ein Antriebsmotor 26 treibt über eine Welle 28 einen Innenwälzkranz 30 an, während ein Antriebsmotor 32 über eine nicht näher bezeichnete Triebverbindung einen Außenwälzkranz 34 in Drehung versetzt. Wie aus Fig. 2 hervorgeht, befinden sich zwischen Innen- und Außenwälzkranz 30, 34 fünf Läuferscheiben 36 mit einer Außenzahnung und einem Durchmesser derart, daß sie sich am Innen- und Außenwälzkranz abwälzen, wenn mindestens einer der Wälzkränze angetrieben ist. Die Anordnung gleicht einem Planetengetriebe, wobei im vorliegenden Fall die Läuferscheiben 36 den Planetenrädern eines Planetengetriebes entsprechen. Jede Läuferscheibe 36 weist vier Aufnahmelöcher 38 zur Aufnahme von Werkstücken 40 auf.

Dreht sich der Innenwälzkranz 30 mit der Drehzahl $n_M$, laufen die Läuferscheiben 36 mit der Drehzahl $n_{UL}$ um und drehen sich dabei um ihre Achse mit der Eigendrehzahl $n_L$.Die Größe von Eigendrehzahl $n_L$ und Umlaufdrehzahl $n_{UL}$ hängt neben der Antriebsdrehzahl $n_M$ von der sogenannten Abwälzgeometrie ab, d.h. den Zähnezahlverhältnissen von Innen- und Außenwälzkranz 30, 34 bzw. den Zähnen am Umfang der Läuferscheiben 36. Wird auch der Außenwälzkranz 34 angetrieben mit der Drehzahl $n_A$, wird dadurch auch die Umlaufdrehzahl $n_{UL}$ und die Eigendrehzahl $n_L$ beeinflußt. Hierauf wird weiter unten noch eingegangen.

Die Sollwerte für die Drehzahlen der Antriebe 14, 24, 26, 32 werden in einer Steuerstufe 42 erzeugt, die vier Unterstufen I, II, III und IV aufweist, nämlich für den Sollwert $SWn_M$ bezüglich der Drehzahl des Innenwälzkranzes 30, den Sollwert $SWn_U$ bezüglich der Drehzahl der unteren Arbeitsscheibe 20, den Sollwert $SWn_A$ bezüglich der Drehzahl für den Außenwälzkranz 34 und den Sollwert $SWn_O$ bezüglich der Drehzahl für die obere Arbeitsscheibe 10. Die Steuerstufe erhält zu diesem Zwecke die Drehzahlvorgaben $n_M$, $n_U$, $n_A$ und $n_O$ aus einem Rechner 44. Der Rechner 44 weist vier Steuereingänge auf, nämlich für die Eigendrehzahl $n_L$ der Läuferscheiben 36, die Differenzgeschwindigkeit $n_{\Delta U}$, der Differenzgeschwindigkeit zwischen unterer Arbeitsscheibe 20 und Umlaufdrehzahl $n_{UL}$ der Läuferscheiben 36, für die Umlaufdrehzahl $n_{UL}$ der Läuferscheiben 36 und die Differenzdrehzahl $n_{\Delta O}$, der Differenzdrehzahl zwischen oberer Arbeitsscheibe 10 und Umlaufdrehzahl $n_{UL}$ der Läuferscheiben 36. Mit anderen Worten, zur Steuerung der erwähnten Antriebe 14, 24, 36 und 32 werden nicht deren Drehzahlen, sondern die Differenzgeschwindigkeit, die Umlaufdrehzahl bzw. die Eigendrehzahl der Läuferscheiben vorgeben. Anstelle der Drehzahlen, wie in Fig. 1 dargestellt, können selbstverständlich auch die entsprechenden Geschwindigkeiten vorgegeben werden, nämlich wie in Fig. 1 dargestellt, $V_{WST}$, $V_{\Delta U}$, $V_{ULA}$, $V_{\Delta O}$, denn Geschwindigkeit und Drehzahl stehen naturgemäß im festen Verhältnis K zueinander. Aus den genannten Vorgaben errechnet der Rechner 44 die entsprechenden Solldrehzahlen für die Antriebe nach folgender Beziehung:

$$n_L = K_L \cdot n_M$$

$$n_{\Delta ou} = n_{ou} + K_{UL} \cdot n_M,$$

wobei $K_L$ und $K_{UL}$ die Zähnezahlverhältnisse darstellen, um $n_L$ bzw. $n_{UL}$ zu erhalten. Es versteht sich, daß die untere Formel jeweils getrennt für obere und untere Arbeitsscheibe 10, 20 anzuwenden ist.

Wird zum Beispiel die Eigendrehzahl der Läuferscheiben 36 vorgegeben aufgrund von Vorschriften des Maschinenherstellers, u.a. auch nach Maßgabe der Werkstücke, des Läpp-, Polier- oder Schleifmittels, ergibt sich daraus eine bestimmte Drehzahl für den Antrieb 26 für den Innenwälzkranz 30. Außerdem wird zur Erzielung einer optimalen Abtragleistung und -qualität die Differenzgeschwindigkeit bzw. -drehzahl zwischen oberer Läuferscheibe bzw. unterer Arbeitsscheibe und Umlaufdrehzahl vorgegeben. Durch die erstere Formel und die Vorgabe der Eigendrehzahl steht die Drehzahl $n_M$ des Antriebs 26 fest, und es ergibt sich aus der unteren Formel die Drehzahl $n_u$ bzw. $n_o$ für die untere bzw. obere Arbeitsscheibe 20, 10. Wird nun eine der Vorgaben geändert, zieht dies automatisch auch eine Veränderung der anderen Parameter nach sich, ohne daß eine gezielte Einstellung von außen vorgenommen werden muß.

Werden anstelle der Vorgaben zur Eigendrehzahl und zur Umlaufdrehzahl die Geschwindigkeiten vorgegeben, kommen folgende Beziehungen zur Anwendung:

$$V_L = K1 \cdot (K_L \cdot n_M)$$
$$V_{\Delta ou} = K1 \, (n_{ou} \pm K_{UL} \cdot n_M),$$

wobei $V_L$ die Eigenumlaufgeschwindigkeit der Läuferscheiben und $V_\Delta$ die Differenzumlaufgeschwindigkeit zwischen Läuferscheiben 36 und unterer oder oberer Arbeitsscheibe 20, 10 bei einem vorgegebenen Radius sind.

Wird auch der Außenwälzkranz 34 vom Antrieb 32 angetrieben, so werden dadurch die mathematischen Beziehungen nicht grundsätzlich verändert. Zur Drehzahl $n_M$ für den Innenwälzkranz 34 muß dann nur noch je nach Drehrichtung die Drehzahl $n_A$ für den Außenwälzkranz 34 hinzugezählt bzw. abgezählt werden:

$$n_M = n'_M \pm n_{A'}$$

wobei $n'_M$ die nunmehrige Drehzahl des Innenwälzkranzes 30 und $n_M$ jetzt die zusammengesetzte Drehzahl von Innen- und Außenwälzkranz sind.

Mit Hilfe des angetriebenen Außenwälzkranzes 34 kann die Drehzahl für diesen so gewählt werden, daß die Umlaufdrehzahl $n_{UL}$ für die Läuferscheiben 36 Null wird. Dies ist der Fall, wenn die Drehzahl $n_A$ für den Außenwälzkranz 34 gleich groß ist wie die Umlaufdrehzahl $n_{UL}$ nur die entgegenge-

setzte Drehrichtung hat:

$$n_A = K_{UL} \cdot n'_M.$$

Um diesen speziellen Wert zu erhalten, kann beispielsweise über den Steuereingang $n_{Gleich}$ zum Rechner 44 dieser Zustand erreicht werden. Es sind jedoch auch andere Sonderbetriebsweisen möglich, zum Beispiel Umlauf der Läuferscheiben 36 mit der Eigendrehzahl Null. In diesem Fall drehen sich Innen- und Außenkranz 30, 34 und vorzugsweise auch die Arbeitsscheibe mit gleicher Drehzahl. Schließlich können in den beiden beschriebenen Betriebsweisen die Läuferscheiben 36 in einer bestimmten Position angehalten werden. Zu diesem Zweck sind den Antrieben 14, 24, 26 und 32 Positions- und Drehzahlfühler 46, 48, 50 bzw. 52 zugeordnet, welche die jeweilige Istdrehzahl auf den Rechner 44 geben entsprechend den Eingängen $IWn_U$, $IWn_A$, $IWn_U$ und $IWn_M$. Selbstverständlich können die Drehzahlsignale auch in Winkelsignalen ausgedrückt werden, so daß der Rechner 44 zu jedem Zeitpunkt die jeweilige Drehlage von Innenkranz und Außenkranz 30, 34 feststellen kann, um die Läuferscheiben 36 in einer vorgegebenen Position im Hinblick auf die Abwälzkränze 30, 34 und im Hinblick auf die eigene Umlaufposition zu stoppen, zum Beispiel um eine gezielte Entnahme der Werkstücke 40 vorzunehmen bzw. eine erneute Beladung mit Hilfe einer automatischen Einrichtung. Im übrigen läßt sich durch die Drehzahlermittlung eine genaue Regelung der Antriebe 14, 24, 26 und 32 in bekannter Weise durchführen.

**Patentansprüche**

1. Vorrichtung zur Steuerung oder Regelung von Läpp-, Hon- oder Poliermaschinen, die mindestens eine von einem veränderlichen Arbeitsscheibenantrieb angetriebene Arbeitsscheibe, mindestens eine mit einer Umfangszahnung versehene Läuferscheibe und einen Innen- und einen Außenwälzkranz für die Läuferscheibe aufweisen, wobei mindestens der Innenwälzkranz von einem veränderbaren Innenwälzkranzantrieb angetrieben ist und eine Steuerstufe ein Steuersignal auf den Arbeitsscheibenantrieb und den Innenwälzkranzantrieb gibt zur Steuerung der gewünschten Antriebsdrehzahl, dadurch gekennzeichnet, daß der Steuerstufe (42) eine die Eingangssignale ($n_M$, $n_U$, $n_A$, $n_O$) für die Steuerstufe (42) erzeugender Rechner (44) vorgeschaltet ist, der die Drehzahl ($n_M$) für den Innenwälzkranzantrieb (26) und die Drehzahl für den Arbeitsscheibenantrieb (24) bzw. (14) aus den Formeln:

$$n_L = K_L \cdot n_M$$
$$n_\Delta = n \pm K_{UL} \cdot n_M$$

errechnet, wobei $K_L$ und $K_{UL}$ Konstanten der Abwälzgeometrie sind und $n_L$ als Eigendrehzahl und $n_\Delta$ als Differenzdrehzahl von Arbeitsscheibendrehzahl n und Umlaufdrehzahl der Läuferscheibe (36) die vorgegebenen Sollwerte bilden.

2. Vorrichtung nach Anspruch 1, dadurch gekennzeichnet,daß anstelle der Drehzahlwerte die entsprechenden analogen Geschwindigkeitswerte vorgegeben bzw. verwendet werden.

3. Vorrichtung nach Anspruch 1, bei der ein Antrieb (32) für einen Außenwälzkranz (34) vorgesehen ist, dadurch gekennzeichnet, daß der Rechner (44) die Drehzahl ($n'_M$) für den Innenwälzkranz (30) und die Drehzahl ($n_A$) für den Außenwälzkranz aus den Formeln:

$$n_M = n'_M \pm n_A \text{ und}$$
$$n_A = -K_{UL} \cdot n'_M$$

errechnet.

4. Vorrichtung nach Anspruch 3, dadurch gekennzeichnet,daß die Drehzahlen ($n_A$) und ($n_M$) für den Außen- und den Innenwälzkranz gleich groß sind, jedoch entgegengesetztes Vorzeichen haben.

5. Vorrichtung nach Anspruch 3, dadurch gekennzeichnet,daß die Drehzahlen ($n_A$, $n_M$) für den Außen- und den Innenwälzkranz gleich groß sind und gleiches Vorzeichen haben.

6. Vorrichtung nach Anspruch 5, dadurch gekennzeichnet,daß die Drehzahl der Arbeitsscheibe (n) gleich groß ist wie die Drehzahlen $n_A$ und $n_M$.

7. Vorrichtung nach einem der Ansprüche 1 bis 6, dadurch gekennzeichnet, daß den Antrieben (14, 24, 26, 32) Drehzahl- bzw. Geschwindigkeitsmeßfühler (46, 48, 50, 52) zugeordnet sind, deren Ausgangssignale als Istwert in den Rechner (44) gegeben und mit den Sollwerten für die Steuersignale verglichen werden.

8. Vorrichtung nach Anspruch 7, dadurch gekennzeichnet,daß die gemessenen Drehzahlen ($n_M$, n, $n_A$) oder ihre Geschwindigkeit über eine Digitalanzeige angezeigt werden.

9. Vorrichtung nach einem der Ansprüche 1 bis 8, dadurch gekennzeichnet, daß eine zweite Arbeitsscheibe mit einem eigenen Arbeitsscheibenantrieb vorgesehen ist.

10. Vorrichtung nach einem der Ansprüche 3 bis 6, dadurch gekennzeichnet, daß der Rechner (44) einen separaten Steuereingang ($n_{Gleich}$) aufweist für den Sollwert zur Drehzahl bzw. der Umlaufgeschwindigkeit des Außenwälzkranzes (34) zwecks Verstellung der Umlaufdrehzahl ($n_{UL}$) der Läuferscheibe (36).

11. Vorrichtung nach einem der Ansprüche 1 bis 10, dadurch gekennzeichnet, daß eine Meßvorrichtung für den Abtrag an den Arbeitsscheiben (40) und/oder eine die Zahl der Läuferscheibenumläufe zählende Drehzahlzählvorrichtung vorgesehen ist und der Rechner (44) eine Drehzahlumkehr für den Antrieb (26) des Innenwälzkranzes (30) und/oder der Arbeitsscheibe vornimmt, wenn der Abtrag und/oder die Anzahl der Umläufe einen vorgegebenen Wert erreicht.

12. Vorrichtung nach einem der Ansprüche 1 bis 11, dadurch gekennzeichnet, daß eine Warnvorrichtung vorgesehen ist, die ein Warnsignal erzeugt,wenn die Drehzahl ($n_U$, $n_O$) für die Arbeitsscheibe (20, 10) oder den Innenwälzkranz (30) einen vorgegebenen Wert überschreitet.

EP 0 472 903 A1

FIG.1

7

FIG.2

Europäisches Patentamt

# EUROPÄISCHER RECHERCHENBERICHT

Nummer der Anmeldung

EP    91 11 2369

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 307 573 (PETER WOLTERS AG) 22. März 1989<br>* Spalte 6, Zeile 4 - Spalte 7, Zeile 36 *<br>* Abbildungen 1,2 *<br>--- | 1,3,7,9 | B23Q15/08 |
| A | EP-A-0 344 548 (PETER WOLTERS AG) 6. Dezember 1989<br>* Spalte 4, Zeile 53 - Spalte 6, Zeile 12 *<br>* Spalte 7, Zeile 3 - Spalte 7, Zeile 35 *<br>* Abbildung FIGUR *<br><br>----- | 1,3,4,9,<br>11,12 | |

**RECHERCHIERTE SACHGEBIETE (Int. Cl.5 )**

B23Q
B24B

Der vorliegende Recherchenbericht wurde für alle Patentansprüche erstellt

| Recherchenort | Abschlußdatum der Recherche | Prüfer |
|---|---|---|
| DEN HAAG | 22 NOVEMBER 1991 | NETTESHEIM J. |